# EUROPEAN PATENT APPLICATION

(11) **EP 1 903 574 A2**
(43) Date of publication of application: **26.03.2008**
(21) Application number: 07116720.9
(22) Date of filing: 19.09.2007
(51) Int. Cl.: G11B 27/034

(54) **Data processing apparatus, recorder and disk with multiple storage layers**

(30) Priority: 20.09.2006 JP 2006254674
(71) Applicant: Matsushita Electric Industrial Co., Ltd., Kadoma-shi Osaka 571-8501 (JP)
(72) Inventor: Gotoh, Yoshiho c/o Matsushita Electr. Industr., Chuo-ku, Osaka 540-6207 (JP); Hamasaka, Hiroshi c/o Matsushita Electr.Industr., Chuo-ku, Osaka 540-6207 (JP)
(74) Representative: Grünecker, Kinkeldey, Stockmair & Schwanhäusser Anwaltssozietät

(57) **Abstract**

A data processing apparatus according to the present invention generates data to be written continuously on first and second recording layers of a recording medium. The first and second recording layers have first and second storage capacities, respectively. The data processing apparatus includes: a data storage in which the data to be written is split into, and stored separately as, first and second data, the first data having a data size that is smaller than the first storage capacity, the second data having a data size that is smaller than the second storage capacity; a communication section for getting the end address of a data recordable area of the first recording layer; a controller for adjusting the data size of the first data such that the beginning of the first data is written at the start address of the data recordable area of the first recording layer and that the end of the first data is written at the end address gotten; and an output section for outputting the first data, the data size of which size has been adjusted, and the second data.

## Description

### BACKGROUND OF THE INVENTION

### 1. Field of the Invention:

The present invention relates to an image data processing apparatus for use in a service of downloading a video content onto a dual layer disk and also relates to an apparatus for writing such image data.

### 2. Description of the Related Art:

To make a read-only DVD-Video disk (which will be simply referred to herein as a "DVD-Video disk") to release it on the market, data compliant with the Cutting Master Format (CMF) is prepared in advance, a master is made based on that data, and then a DVD-Video disk is produced using that master. When a DVD-Video disk with two recording layers that have a combined storage capacity of 8.54 GB (=8.54 × 10⁹ bytes) is made, data compliant with the CMF is prepared for each of those two layers.

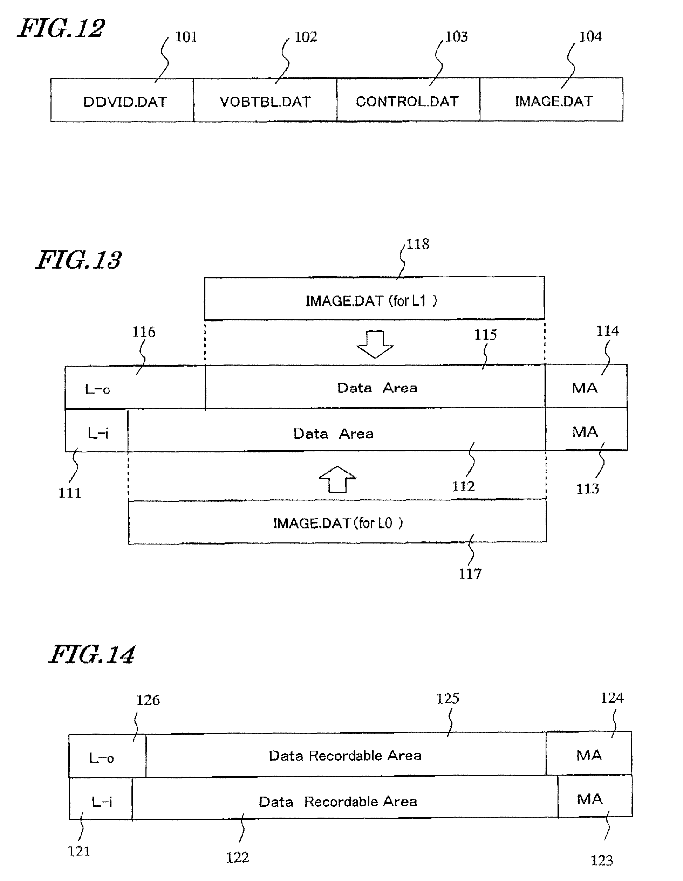

FIG. **12** shows the data structure of data compliant w ith the CMF (which will be referred to herein as "CMF data"). For example, this data structure is defined in DVD Cutting Ma ster Format Specification Ver. 1.00: DVD Video and DVD ROM, found on September 19, 2006 by searching the Internet.
<URL:http://www.dvdforum.org/tech-dvd cutting master format spec.htm>.

The CMF data is distributed in four files **101** to **104.** Specifically, the DDVID.DAT file **101** stores CMF identification information. The VOBTBL.DAT file **102** stores a video manager and information about the locations of respective video title sets. The CONTROL.DAT file **103** stores information about control data to be written on a lead-in area. And the IMAGE. DAT file **104** stores image data to be written on a data recordable area.

FIG. **13** shows the layer structure of a dual layer DVD-Video disk (which will be simply referred to herein as a "disk") and the arrangement of data when image data is written on the disk. First, the disk structure will be described.

This disk has a so-called "opposite track path", in which a physical address is assigned to each sector of the disk.

Specifically, the disk includes a first layer (Layer 0, which will be referred to herein as "L0 layer") consisting of a lead-in area **111,** a data area **112** and a middle area **113** and a second layer (Layer 1, which will be referred to herein as "L1 layer") consisting of a middle area **114,** a data area **115** and a lead-out area **116.** The physical addresses are assigned so as to increase rightward from the area **111** through the area **113** and then leftward from the area **114** through the area **116.**

In a dual layer DVD-Video disk, the start address of the data area **112** of the L0 layer is fixed but the end address thereof is not fixed but determined by the size of the data to be written on the data area **112.** The middle area **113** of the L0 layer is arranged right after the data area **112.** That is why the beginning of the middle area **113** is also determined by the size of the data to be written on the data area **112.**

The middle area **114** of the L1 layer is arranged symmetrically to the middle area **113** of the L0 layer. As a result, when viewed perpendicularly to the disk, the end of the data area **112** of the L0 layer and the beginning of the data area **115** of the L1 layer approximately agree with each other.

The end address of the data area **112** of the L0 layer and the start address of the data area **115** of the L1 layer are complements of two in the physical sector number space and are continuous with each other in the logical sector number space.

The end address of the data area **115** of the L1 layer is not fixed but determined by the start address of the data area **115** of the L1 layer and the size of the data to be written on the data area **115.** The lead-out area **116** of the L1 layer is arranged right after the data area **115** of the L1 layer. That is why the beginning of the lead-out area **116** is also determined by the size of the data to be written on the data area **115.**

In making a disk with such a structure, CMF data is prepared for each layer as described above. In this example, IMAGE. DAT **117** is provided for the data area **112** of the L0 layer and IMAGE.DAT **118** is provided for the data area **115** of the L1 layer. When the image data for the data areas of the respective layer are prepared, the arrangements of the middle area and the lead-out area are determined according to the sizes of those data and the conditions on the area arrangement described above.

In making a read-only DVD-Video disk for sale, the data to be bound-recorded has already been fixed. That is why the CMF data can be generated while adjusting the beginnings and ends of the respective areas described above.

However, such adjustment of the beginnings and ends of respective areas cannot be done when data is written on a write-once or rewritable optical disk with multiple recording layers. This is because the data area and middle area of the L0 layer and the middle area and the data area of the L1 layer are fixed on disks of those types.

For that reason, if content data that has been acquired by using a video content download service has such a big data size that the data needs to be written over multiple layers, then neither a write-once disk nor a rewritable disk can be used, which is a problem.

FIG. **14** shows the physical structure of a dual layer DVD-R disk. Just like the DVD-Video disk described above, the end address of a lead-in area (L-i) **121** is fixed. On the other hand, the end address of a data recordable area **122** of the L0 layer and the start address of the middle area **123** thereof are determined when the disk is produced.

As far as the address space of physical sector numbers is concerned, the end address of the data recordable area **122** of the L0 layer and the start address of the data recordable area **125** of the L1 layer are complements of two. On the other hand, in the logical sector number space, these two addresses are continuous with each other. That is why the end address of the middle area **124** of the L1 layer is also determined when the disk is produced. It should be noted that the lead-out area (L-o) **126** could be defined after data has been written.

In the dual layer DVD-R disk shown in FIG. **14,** the middle areas **123** and **124** are fixed when the disk is produced. Therefore, unless the data size of image data coincides with the area size of the data recordable area **122** of the L0 layer, whenever image data is written on the L0 layer, an unused portion of the data recordable area **122** is left between the image data and the middle area **123.** As a result, the logical sector address of the image data that has been written on the L0 layer and that of the image data that has been written on the L1 layer will be discontinuous with each other. In that case, a DVD player, which is designed to operate on the supposition that the logical sector addresses of the L0 and L1 layers are continuous with each other, could not play back the content properly.

Among other things, in dual layer DVD-R disks, the locations of the respective data recordable areas **122** and **125** of the L0 and L1 layers as viewed perpendicularly to the disk could sometimes shift from each other within a certain range due to some manufacturing error of the disk manufacturing equipment. Examples of the "manufacturing errors" include a track pitch error and a bonding error between two recording layers to be caused by a difference in equipment between the manufacturers. In writing data on the L1 layer of a dual-layer DVD-R disk, unless data has been written at a corresponding location on the L0 layer as viewed perpendicularly to the disk, the data cannot be written properly on the L1 layer. For that reason, in a dual layer DVD-R disk, the data recordable area of the L0 layer has a bigger size than that of the L1 layer with the potential manufacturing error between the L1 and L0 layers taken into account.

In the example shown in FIG. **14,** the size of the data recordable area **122** of the L0 layer is greater than that of the data recordable area **125** of the L1 layer. Supposing a dual layer DVD-Video disk and a dual layer DVD-R disk have the same maximum storage capacity, the data recordable area of the L0 layer of the dual layer DVD-R disk is bigger than the data area of the L0 layer of the dual layer DVD-Video disk. Therefore, if image data were generated so as to be stored on a dual layer DVD-Video disk, then the unused portion would be left on a dual layer DVD-R disk when the image data is written on the dual layer DVD-R disk.

To avoid such a problem, a portion of the image data to be written on the L1 layer could be written in the unused portion of the recordable area right after the image data has been written on the L0 layer. According to the DVD-Video format, however, a cell, which is the minimum continuous unit of video data, should not be written beyond any boundary between multiple layers. That is why such an alternative method is not appropriate. To ensure compatibility with currently available methods of generating CMF data, it is necessary to provide CMF data, of which the cell is split at the boundary between the image data to be written on respective layers.

### SUMMARY OF THE INVENTION

An object of the present invention is to modify prepared image data by as simple a method as possible and get the data ready to be written on a write-once or rewritable recording medium when a content needs to be downloaded and stored on such a recording medium.

A data processing apparatus according to the present invention generates data to be written continuously on first and second recording layers of a recording medium. The first and second recording layers have first and second storage capacities, respectively. The data processing apparatus includes: a data storage in which the data to be written is split into, and stored separately as, first and second data, the first data having a data size that is smaller than the first storage capacity, the second data having a data size that is smaller than the second storage capacity; a communication section for getting the end address of a data recordable area of the first recording layer; a controller for adjusting the data size of the first data such that the beginning of the first data is written at the start address of the data recordable area of the first recording layer and that the end of the first data is written at the end address gotten; and an output section for outputting the first data, the data size of which has been adjusted, and the second data.

In one preferred embodiment, the controller adjusts the data size of the first data by inserting additional data by reference to the end address.

In this particular preferred embodiment, the start address of the data recordable area of the first recording layer has been determined in advance. And the controller inserts additional data, the data size of which is equal to a difference between the area size of the data recordable area of the first recording layer having the first storage capacity and the data size of the first data stored. The area size has been calculated based on the start and end addresses.

In another preferred embodiment, the first data includes content data and management information for managing the location of the content data. If the location of the content data has changed due to the insertion of the additional data, the controller updates the management information.

In this particular preferred embodiment, the recording medium stores unique identification information, the communication section gets the identification information, and the controller encrypts the content data using the identification information and generates scramble information, indicating that the content data has been encrypted, as a portion of the first data.

A recorder according to the present invention writes data that has been received from a server on first and second recording layers of a recording medium continuously. The recorder includes: a communication controller for sending the end address of a data recordable area of the first recording layer to the server and receiving first data, the data size of which has been adjusted by reference to the end address, and second data; and a drive controller for writing the first data, the data size of which has been adjusted, on the first recording layer and also writing the second data on the second recording layer.

In one preferred embodiment, the recording medium stores unique identification information, and the communication controller transmits the identification information to the server, and then receives the first data, which has been encrypted with the identification information and the data size of which has been adjusted.

In another preferred embodiment, a recording unit is defined for the recording medium. The first data includes encrypted content data, scramble information indicating that the content data has been encrypted, and management information for managing the location of the content data. The drive controller divides the encrypted content data into multiple recording units, writes the units separately, and also writes the scramble information on a header of each recording unit.

In still another preferred embodiment, the drive controller starts writing the first data at the start address of the data recordable area of the first recording layer such that the end of the first data is written at the end address.

A player according to the present invention reads data from a recording medium, on which the data has been written by the recorder of the present invention. The player includes: a controller that instructs when to start reading; and a drive controller for starting reading the first data at the start address of the data recordable area of the first recording layer and also starting reading the second data at the start address of the data recordable area of the second recording layer. As the end of the first data has been written at the end address, the drive controller starts reading the second data at the start address of the data recordable area of the second recording layer that is right next to the end address.

On a recording medium according to the present invention, data has been written continuously on first and second recording layers having first and second storage capacities, respectively, and each having a data recordable area. First data starts to be written at the start address of the data recordable area of the first recording layer and the end of the first data is written at the end address thereof. Second data starts to be written at the start address of the data recordable area of the second recording layer. The first data includes data for adjusting the data length of the first data.

The data processing apparatus of the present invention gets the end address of the data recordable area of the first recording layer, and adjusts the data size of the first data such that the end of the first data is written at the end address of the first recording layer, thereby generating processed first data. If such first data is written on the first recording layer, then the first recording layer will be stuffed with the data through the end. In that case, the address of the last data of the first recording layer will be continuous with that of the first data of the second recording layer. As a result, addressing can be done just as intended when the layers to access are changed from the first recording layer to the second recording layer during the playback operation.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

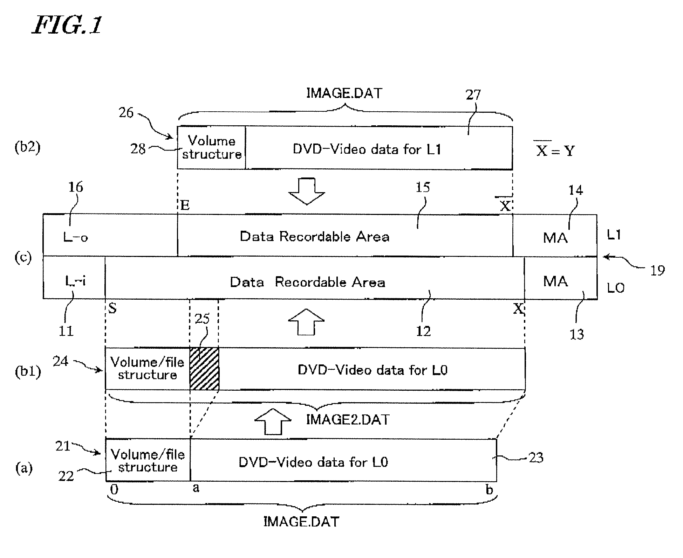

Portions **(a), (b1), (b2)** and **(c)** of FIG. **1** outline a method of adjusting the data size of image data to write the image data on a dual layer optical disk **19**.

FIG. **2** shows an exemplary network configuration for devices to provide and receive the download services.

FIG. **3** shows the hardware configuration of a recorder **20** according to a first preferred embodiment of the present invention.

FIG. **4** shows the hardware configuration of the video server **30** of the first preferred embodiment.

FIG. **5** shows an exemplary directory/file structure for a video content to be recorded on a disk.

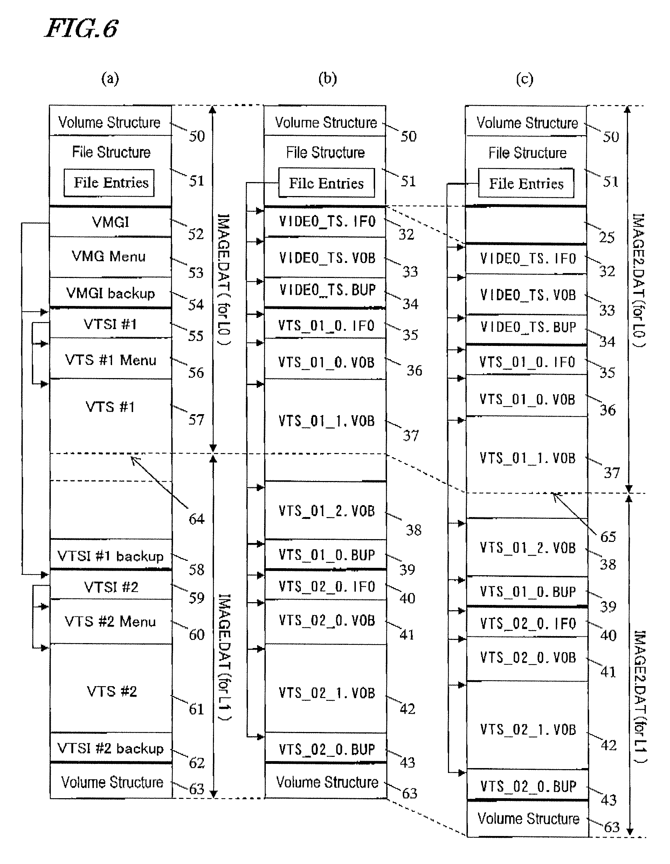

Portions **(a), (b)** and **(c)** of FIG. **6** show correlation between image data generated for a DVD-Video disk and image data that has been modified for a dual layer DVD-R or DVD-RW disk according to the present invention.

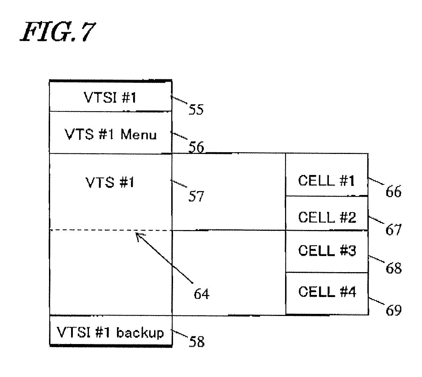

FIG. **7** shows the details of the first video title set.

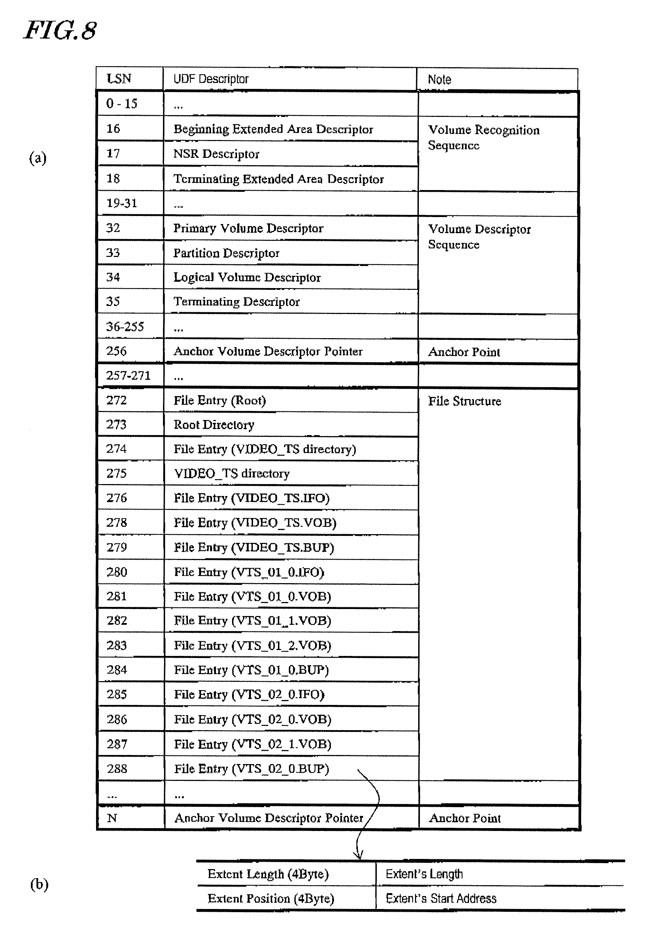

Portions **(a)** and **(b)** of **FIG. 8** show exemplary data of the volume/file structure to be stored on a sector-by-sector basis.

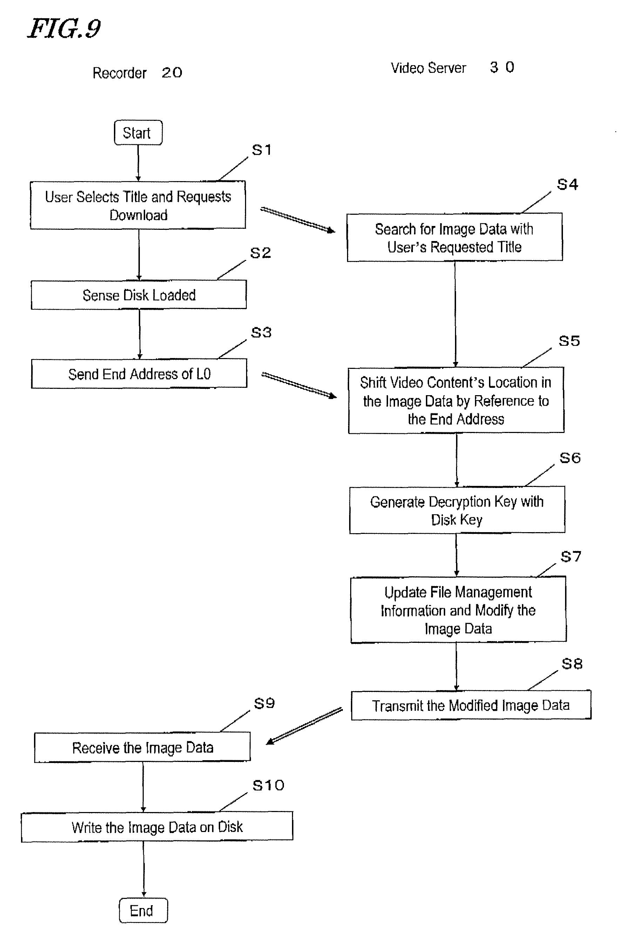

FIG. **9** is a flowchart showing the procedure of the processing to be done by the recorder **20** and the video server **30** of the first preferred embodiment.

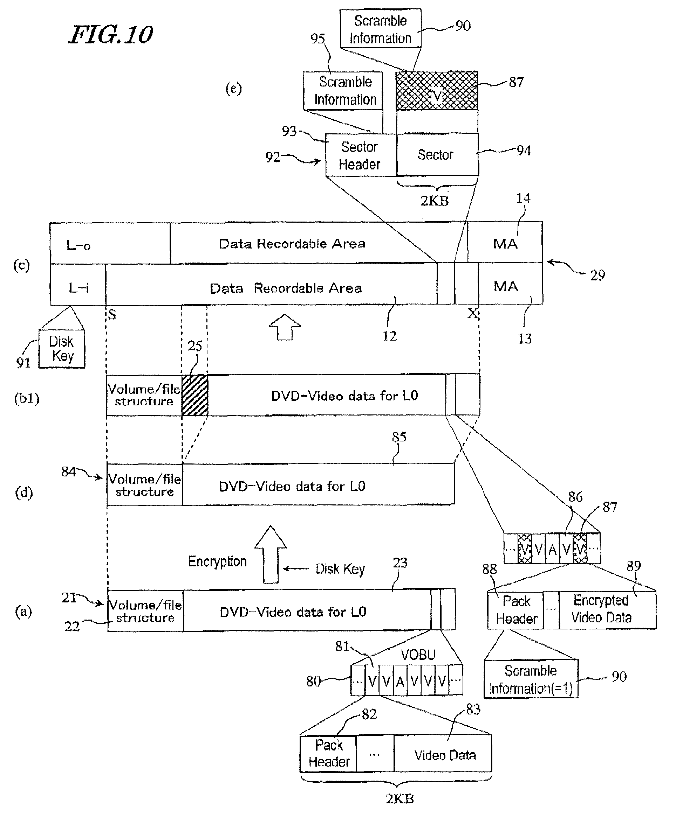

Portions **(a), (b1), (c), (d)** and **(e)** of FIG. **10** outline the processing of writing image data on a dual layer optical disk **29.**

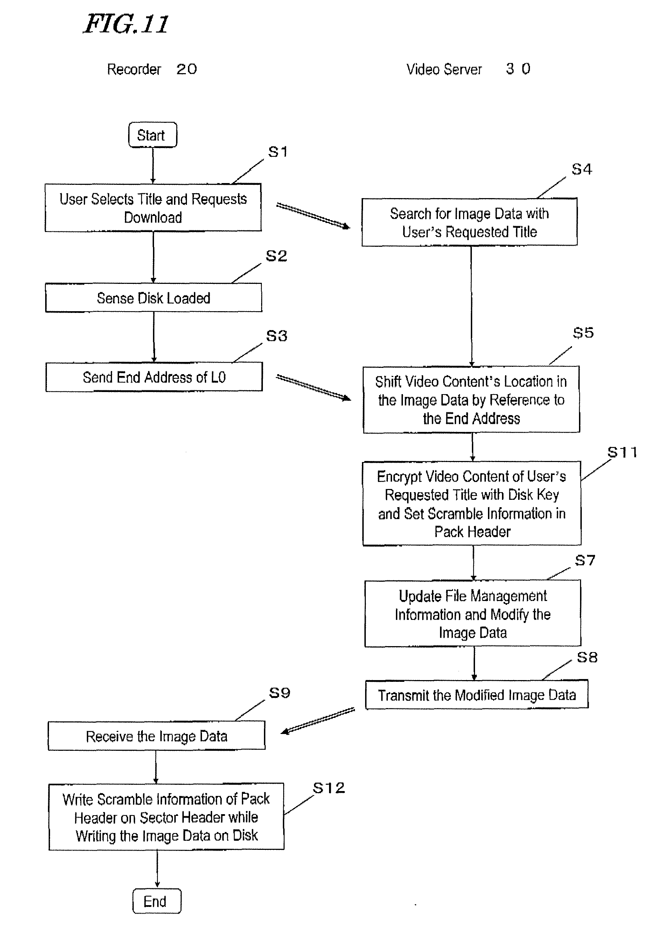

FIG. **11** is a flowchart showing the procedure of processing to be done by the recorder **20** and the video server **30** according to a second preferred embodiment of the present invention.

FIG. **12** shows the data structure of data compliant with the CMF.

FIG. **13** shows the layer structure of a dual layer DVD-Video disk and the arrangement of data when image data is written on the disk.

FIG. **14** shows the physical structure of a dual layer DVD-R disk.

### DETAILED DESCRIPTION OF PREFERRED EMBODIMENTS

Hereinafter, preferred embodiments of a data processing apparatus according to the present invention will be described with reference to the accompanying drawings.

### EMBODIMENT 1

Portions **(a) , (b1), (b2)** and **(c)** of FIG. **1** outline a method of adjusting the data size of image data to write the image data on a dual layer optical disk **19.** Portion **(c)** of FIG. **1** schematically illustrates a cross section of the dual layer optical disk **19.** In the following example, the dual layer optical disk **19** is supposed to be a dual layer DVD-R disk. However, the dual layer optical disk **19** may also be a dual layer DVD-RW disk or any other recordable optical disk with multiple recording layers. Portions **(a)** and **(b2)** of FIG. **1** show image data **21** that has been prepared to be written on the L0 layer and image data **26** that has been prepared to be written on the L1 layer, respectively. On the other hand, portion **(b1)** of FIG. **1** shows image data that has been processed by the processing of this preferred embodiment.

As shown in portion **(c)** of FIG. **1,** the L0 layer includes a lead-in area **11,** a data recordable area **12** and a middle area **13,** which are arranged in this order. The physical address of the start sector of the data recordable area **12** of the L0 layer is identified by S and the physical address of the end sector thereof by X. The middle area **13** has already been fixed.

In this case, the addresses are assigned along an opposite track path, and therefore, the physical addresses are assigned continuously from the middle area **13** of the L0 layer to the middle area **14** of the L1 layer. A data recordable area **15** is arranged to follow the middle area **14** of the L1 layer. In portion **(c)** of FIG. **1,** a lead-out area **16** is already present. It should be noted, however, that there is no lead-out area **16** on the disk **19** before data is written there.

In portion **(c)** of FIG. **1,** the start address of the data recordable area **15** is identified by X with a bar, which means that this address is a complement of two with respect to the end address of the data recordable area **12** of the L0 layer. In the following description, however, the start address of the data recordable area **15** will be identified by Y and the end address thereof by E.

The data to be written on the L0 and L1 layers has already been split into two, which are stored in a server to provide the data by a download service. As used herein, the "download service" means a service of allowing the user to get the data of a billed content (such as a video content) downloaded from a server over a network when he or she selects and agrees to pay for the content. For example, a system that allows the user to purchase a content by "video on demand" is a download service.

The image data **21** and **26** have a data structure compliant with the DVD-Video standard. The data sizes of these image data are smaller than the minimum area sizes of the data recordable areas **12** and **15** of the L0 and L1 layers.

These minimum area sizes are determined compliant with the standard for dual layer DVD-R disks. The standard defines the tolerance of manufacturing errors on the data recordable areas of manufactured disks. The "minimum area size" is defined in advance as the area size of a data recordable area that has become smallest due to a manufacturing error that is tolerated by the standard. That is why in dual layer DVD-R disks, the physical address at the end of the data recordable area of the L0 layer could be different between respective manufacturers or between manufacturing lots.

At the top of the image data **21,** arranged is a piece of information **22** about a volume file structure, which is followed by DVD-Video data **23** for the L0 layer. In the logical sector space, the logical sector numbers (LSNs) are assigned on a sector-by-sector basis. In this example, the beginning of the image data **21** is identified by LSN0 and the beginning and end of the DVD-Video data for the L0 layer are identified by LSNa and LSNb, respectively.

At the top of the image data **26,** arranged is DVD-video data **27** for the L1 layer, which is followed by a volume file structure **28.** It should be noted that since the opposite track path is adopted in FIG. **1,** the logical sector numbers are assigned to respective physical sectors in the data recordable area **15** from the middle area **14** toward the lead-out area **16.**

The processing method of this preferred embodiment includes the steps of (1) getting the end address **X** of the data recordable area **12** of the L0 layer in writing data on the L0 and L1 layers of the dual layer DVD-R disk and (2) adjusting the data size of the image data **21,** which starts to be written on the data recordable area **12** of the L0 layer at the start address **S,** by reference to the end address **X** gotten such that the end of the image data **21** is written at the end address **X** of the data recordable area **12.**

As used herein, "to adjust the data size" means inserting additional data (i.e., padding data) between the piece of information **22** about the volume file structure and the DVD-Video data **23** of the image data **21.**

Portion **(b1)** of FIG. **1** shows the adjusted image data **24** to which the additional data **25** has been inserted. The data size of the additional data **25** is calculated by (X-S)-b, which corresponds to the difference between the area size of the data recordable area **12** of the L0 layer and the data size of the image data **21** for the L0 layer. The additional data may be dummy data, for example, which is entirely padded with zeros.

By inserting the additional data **25,** the location of the DVD-Video data **23** shifts, and therefore, file management information that specifies the location of each file in the piece of information **22** about the volume file structure is updated. The information about the volume file structure in the image data **24** includes the updated file management information. If the file management information is modified such that the top of the DVD-Video data **23** shown in portion **(a)** of FIG. **1** is specified as the data location to access first, the playback processing is not affected even with the additional data **25** inserted. The management information will be described in detail later with reference to FIG. **8.**

The image data **24** thus generated starts to be written on the data recordable area **12** of the L0 layer at the address **S** on the L0 layer. Meanwhile, the image data **26** starts to be written on the data recordable area **15** at the address **Y** on the L1 layer.

After that, the disk is subjected to finalizing processing. When the disk is finalized, the lead-out area **16** is defined at the address **E,** which indicates the end of the data recordable area **15** where data is stored on the L1 layer. As described above, the data size of the image data to be written on the L1 layer may be smaller than the area size of the data recordable area on the L1 layer on a blank disk.

When the finalizing processing is carried out, parameters of the volume structure stored on the L0 and L1 layers are also updated as will be described in detail later.

As described above, according to this preferred embodiment, the data size of image data is adjusted according to the end address of the data recordable area of each disk by inserting additional data thereto. Therefore, when data is written over the L0 and L1 layers consecutively, the logical sector address of the image data that has been written on the L0 layer becomes continuous with that of the image data that has been written on the L1 layer. As a result, the DVD player can read and play back content data just as intended.

The retention of the original image data shown in portions **(a)** and **(b2)** of FIG. **1,** acquisition of the end address **X**, and adjustment of the data size of the image data due to the insertion of the additional data **25** are all carried out by a server that is installed to provide download services as will be described in detail later. After its data size has been adjusted, the image data may be downloaded onto a user's recorder and written on a dual layer DVD-R, for example. To get these types of processing done, the user's recorder needs to have the function of sending out the end address of the loaded dual layer DVD-R to the server.

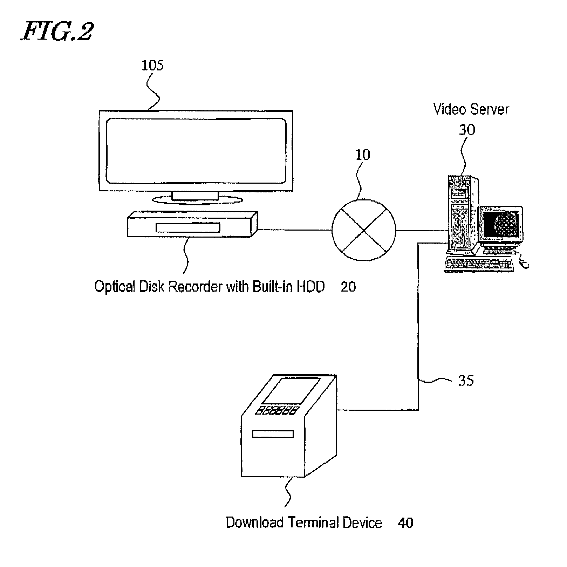

FIG. **2** shows an exemplary network configuration for devices to provide and receive the download services. An optical disk recorder **20** with a built-in HDD (which will be simply referred to herein as a "recorder" **20)** and a video server **30** are connected together over the Internet **10.** The video server **30** is installed by a download service provider, while the recorder **20** is located in a user's house.

Also, the video server **30** and a download terminal device **40** are connected together by way of a dedicated line **35.** The download terminal device **40** may be installed at a railroad station store or a downtown shop. The user selects his or her favorite video content by operating the download terminal device **40,** pays a specified amount of money, gets the video content recorded on a dual layer disk, and then receives the disk.

In the following example, the processing of this preferred embodiment will be described as being applied to the recorder **20** that is connected to the video server **30** over the Internet **10.** However, even when the download terminal device **40** connected to the video server **30** by way of the dedicated line **35** is used, the same processing can be done as in the situation where the recorder **20** is used.

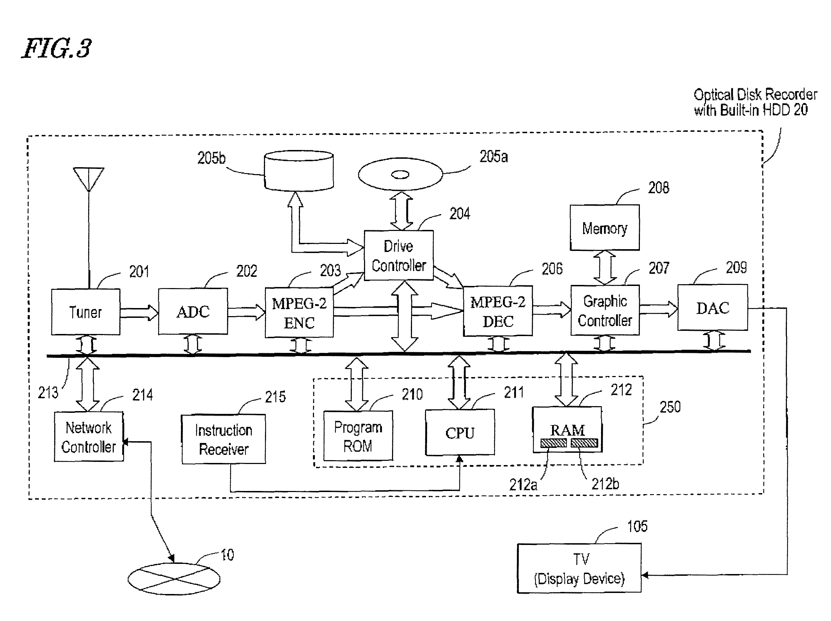

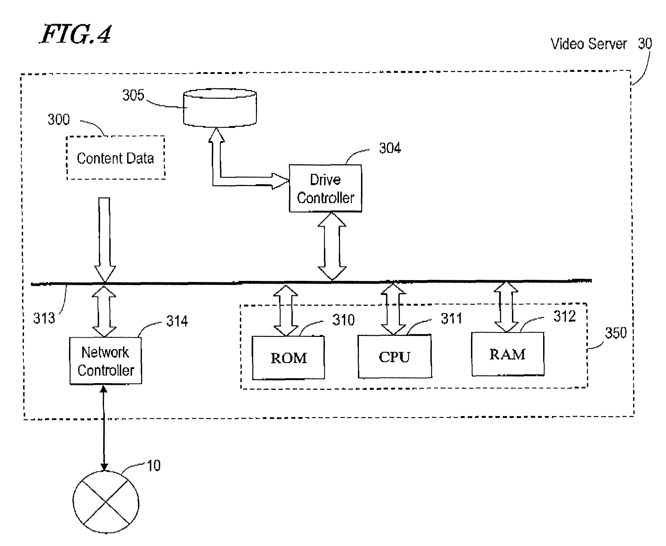

Next, specific hardware configurations of the recorder **20** and the video server **30** will be described with reference to FIGS. **3** and **4.**

FIG. **3** shows the hardware configuration of the recorder **20** of this preferred embodiment. The recorder **20** is supposed to have the basic function of receiving a TV program signal from a broadcaster, generating a data stream based on the received signal, and then recording the data stream on either a dual layer DVD-R disk (which will be referred to herein as a "dual layer optical disk **205a")** or a hard disk **205a.** This function will be referred to herein as a "program recording functian". The received TV program signal may represent either an analog broadcast or a digital broadcast. A configuration for recording an analog broadcast is shown in FIG. **3** as an example.

The recorder **20** also has the function of sending a predetermined request to the video server **30** that provides download services, receiving content data from the video server **30,** and writing that received data on an optical disk with multiple recording layers. This function will be referred to herein as a "download recording function". This download recording function is an essential function for the recorder **20** of this preferred embodiment but the program recording function described above is just an example and is not indispensable for the recorder **20** of this preferred embodiment.

Hereinafter, the components of the recorder **20** will be described.

The recorder **20** includes a tuner **201,** an A/D converter **202,** an MPEG-2 encoder **203,** a drive controller **204,** an MPEG-2 decoder **206,** a graphic controller **207,** a memory **208,** a D/A converter **209,** a CPU bus **213,** a network controller **214,** an instruction receiver **215,** and a system controller **250.** In FIG. **3,** the dual layer optical disk **205a** is shown inside the recorder **20.** It should be noted, however, that the dual layer optical disk **205a** is actually removable from the recorder **20** and does not form part of the recorder **20.**

The system controller **250** consists essentially of a CPU **211,** a program ROM **210** and a RAM **212** and controls the overall processing including signal flows inside the recorder **20.** The other components operate under the instruction given by the system controller **250.**

The program ROM **210,** the CPU **211** and the RAM (which will sometimes be simply referred to herein as a 'memory") **212** are all connected to the CPU bus **213.**

The program ROM **210** stores a software program for controlling the recorder **20.** By reading a program **212a** from the program ROM **210** and extending it on the RAM **212,** the CPU **211** executes the program **212a,** generates a control signal to realize the processing defined by the program and then outputs the control signal to the respective components over the CPU bus **213.** The memory **212** has a work area for storing not only the program **212a** but also data that is needed for the CPU **211** to execute the program **212a.**

for example, if the user has gotten ready to be connected to the video server **30** in order to use the download service, the system controller **250** instructs the network controller **214** (to be described in detail later) to access the video server **30** over the Internet **10.** Also, when the user gives a command to start or finish recording a program, the system controller **250** outputs an instruction to start or finish recording it.

The tuner **201** tunes itself to a particular channel of an analog radio wave that has been transmitted from a broadcaster, receives the radio wave, and then outputs the video and audio signals of the program to the A/D converter **202.** In response, the A/D converter **202** converts the input signals into digital ones and supplies them to the MPEG-2 encoder **203.** On receiving an instruction to start recording, the MPEG-2 encoder **203** (which will be simply referred to herein as an "encoder **203")** compresses and encodes the supplied digital data into the MPEG-2 format, generates an MPEG-2 program stream compliant with the DVD-Video standard (which will be simply referred to herein as a "program stream") and passes it to the drive controller **204.** This processing is continued until the encoder **203** receives an instruction to finish recording. The encoder **203** includes a buffer (not shown) for temporarily storing frame data and other data in order to perform the compression and encoding.

The drive controller **204** controls the processing of reading and writing data from/on the dual layer optical disk **205a** using an optical head (not shown) and also controls the processing of reading and writing data from/on the hard disk **205b** using a magnetic head (not shown).

The drive controller **204** sees if the dual layer optical disk **205a** has been inserted while the user is using the download service. On determining that the dual layer optical disk **205a** has been inserted, the drive controller **204** detects the terminal address **x** (see FIG. **1 (c))** of the data recordable area of its L0 layer and sends the address to the video server **30** by way of the network controller **214.** On the other hand, on receiving the image data that has been sent from the video server **30** by way of the network controller **214,** the drive controller **204** writes the data on the dual layer optical disk **205a.** Optionally, the data may be written on the hard disk **205b** once and then written on the dual layer optical disk **205a.**

Furthermore, in accordance with the instruction to start recording, the drive controller **204** performs recording starting processing. And when receiving the program stream after that, the drive controller **204** starts writing it on either the dual layer optical disk **205a** or the hard disk **205b.** Also, when the program stream stops being supplied after the instruction to finish recording has been received, the drive controller **204** ends the write processing and performs recording ending processing instead.

In this description, the drive controller **204** is supposed to control the exchange of information with both the dual layer optical disk **205a** and the hard disk **205b.** However, two drive controllers may be provided for the drive of the dual layer optical disk **205a** and that of the hard disk **205b,** respectively.

In playing back a content such as a program, on the other hand, the drive controller **204** reads data from the dual layer optical disk **205a** or the hard disk **205b** in accordance with the instruction to start reading that has been given by the system controller **250.** Then, the drive controller **204** outputs the read data to the MPEG-2 decoder **206.** The MPEG-2 decoder **206** (which will be simply referred to herein as a "decoder **206")** decodes the MPEG-2 compression-encoded data supplied, converts it into decompressed data and then passes it to the graphic controller **207.** The graphic controller **207** is connected to the internal computer memory **208** and realizes an on-screen display (OSD) function. For example, the graphic controller **207** combines any of various menu pictures with the video and outputs the resultant synthetic image to the D/A converter **209.** In response, the D/A converter **209** converts the input OSD synthetic image and audio data into analog data and outputs them.

The CPU bus **213** is a path for transferring signals in the recorder **20** and is connected to the tuner **201,** the A/D converter **202,** the encoder **203,** the drive controller **204,** the decoder **206,** the graphic controller **207** and the D/A converter **209.** In addition, the respective components of the system controller **250** described above are also connected to the CPU bus **213.**

The network controller **214** has an interfacing function for connecting the recorder **20** to the Internet **10** and exchanges data over the Internet **10.**

Examples of the data transmitted from the network controller **214** to the video server **30** include a content purchase request, a download request, and information about the end address **X** of the data recordable area **12** of the L0 layer. On the other hand, examples of the data received at the network controller **214** from the video server **30** include title list information of available contents and the image data of the purchased content. It should be noted that the image data has been split into image data to be written on the L0 layer and image data to be written on the L1 layer.

When a remote controller (not shown) as an accessory to the recorder **20** is operated by the user, the instruction receiver **215** receives a signal representing the operation instructed from the remote controller. For example, the instruction receiver **215** may receive a signal representing an instruction to get connected to the video server 30, an instruction to start a recording operation, or an instruction to end a recording operation from the remote controller. The instruction receiver **215** may further include an operating button on the recorder **20.**

FIG. **4** shows the hardware configuration of the video server **30** of this preferred embodiment.

The video server **30** stores the CMF data of a plurality of video contents such as movies on a hard disk or any other storage medium. When the user finishes a video content purchasing procedure, the video server **30** transmits the CMF data of the purchased video content to the user's recorder **20.** The data of the video content is written by the recorder **20** on a DVD-R, which will be treated as a read-only disk just like a DVD-Video disk.

If the data size of the video content data to transmit is too big to write it fully on anything but a dual layer DVD-R, the video server **30** provides a pair of CMF data to be written on the L0 and L1 layers of a dual layer DVD-R (which will be referred to herein as "CMF data for L0 layer" and "CMF data for L1 layer", respectively).

If such a content has been purchased, the video server 30 requires the recorder **20** to transmit information about the dual layer DVD-R loaded in the recorder **20** (more specifically, address information about the end address x of the data recordable area **12** of the L0 layer). On receiving the address information about the end address **X** from the recorder **20,** the video server **20** adjusts the data size of the CMF data for the L0 layer. More particularly, if the CMF data for the L0 layer starts to be written at the start address of the data recordable area of the L0 layer, the video server **30** adjusts the data size of the CMF data for the L0 layer by inserting additional data thereto such that the end of the CMF data for the L0 layer is written at the end address **X** gotten, thereby generating processed CMF data for the L0 layer. Thereafter, the video server **30** transmits the processed CMF data for the L0 layer and the CMF data for the L1 layer to the recorder **20.**

Next, the configuration of the video server **30** will be described.

The video server **30** includes a drive controller **304,** a hard disk **305,** a bus **313,** a network controller **314,** and a system controller **350.** That is to say, the configuration of the video server **30** is similar to that of the recorder **20.** The video server **30** includes all components of the recorder **20** but those used exclusively to perform the program recording function.

When content data **300** is input externally to the video server **30,** the drive controller **304** writes the content data **300** on the hard disk **305.** This content data **300** is supposed to be CMF data. If its data size is relatively big, a pair of CMF data for the L0 and L1 layers of a dual layer DVD-R is stored. The CMF data is supposed to have been encrypted by the CPRM (Content Protection for Recordable Media) technique to enhance security. According to the CPRM technique, encryption is done using information unique to the target disk. As the piece of information unique to each disk, medium identification information (which is also called a "disk key") stored in the BCA (burst cutting area) of the disk may be used. The BDA area is defined in the lead-in area. A barcode like pattern has been formed on the BCA area. And by using that barcode like pattern, a disk key to identify an optical disk can be recorded. This pattern has already been formed when the product is shipped. Examples of known recordable DVDs with the BCA area include DVD-R disks, DVD-RW disks and DVD-RAM disks.

If the content data **300** is mere MPEG encoded data, then the system controller **350** may perform the processing of generating CMF data and then the CMF data may be written on the hard disk **305.**

The system controller **350** consists of a ROM **310,** a CPU **311,** and a RAM **312** and controls the overall processing including signal flows inside the video server **30.**

The program ROM **310** stores a software program for controlling the video server **30** such as a content purchase processing program and a program for processing the CMF data for the L0 layer.

The CPU **311** executes the program that has been read from the program ROM **310** and extended on the RAM **312.** In executing the program for processing the CMF data for the L0 layer, for example, the CPU **311** inserts the additional data to the CMF data for the L0 layer by reference to the address information received from the recorder **20,** thereby generating processed CMF data for the L0 layer. Then the CPU **311** gets the data transmitted to the recorder **20** by the network controller **314.** The network controller **314** has the same function as the counterpart **214** of the recorder **20,** and the description thereof will be omitted herein.

In this preferred embodiment, the video server **30** is supposed to adjust the data size of the CMF data for the L0 layer. This is because as for video contents such as movies, their data should not be modified arbitrarily in many cases in order to protect their copyright.

If a conventional recorder is going to write the data of either a program being recorded now or a program that was recorded previously on a dual layer DVD-R in the DVD-Video format, then the recorder **20** generates the CMF data for the L0 layer by itself. In that case, the recorder performs either an encoding process or a re-encoding process such that the boundary between cells, which are minimum continuous units, is located at the end of the data recordable area of the L0 layer. It should be noted that the CMF data for the L0 layer is prepared in advance without performing the processing of inserting the additional data to the CMF data.

Next, the directory/file structure of the video content to be recorded on the disk will be described. After that, it will be described exactly what type of processing is carried out to insert the additional data 25 to the CMF data for the L0 layer.

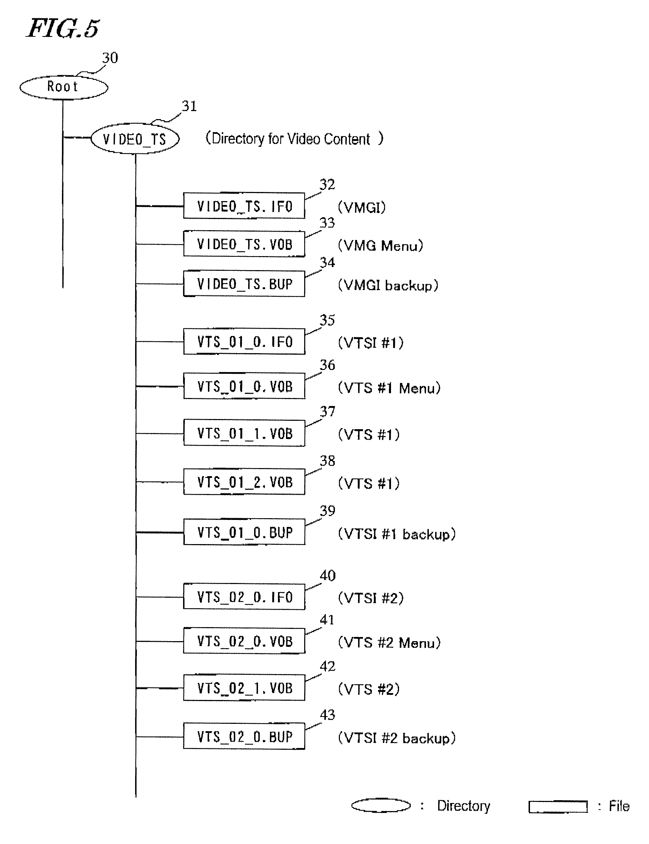

FIG. 5 shows an exemplary directory/file structure for a video content to be recorded on the disk.

As shown in FIG. 5, under the Root directory 30, there is a VIDEO_TS directory **31** for a video content. The respective files of the video content are recorded under the VIDEO_TS directory **31.**

A VIDEO_TS.IFO file **32** stores video manager information **VMGI** for managing respective video title sets. A VIDEO_TS.VOB file **33** stores a video object for displaying a video manager menu **VMG Menu.** A VIDEO_TS.BUP file **34** stores a backup **VMGI backup** for the video manager information. The video manager consists of these files **32, 33** and **34.**

A VTS_01_O.IFO file **35** stores information **VTSI#1** about a first video title set. A VTS_01_0.VOB file **36** stores a video object for menu **VTS#1 Menu** for the first video title set.

The video object **VTS#1** of the first video title set has been split into, and stored as, a VTS_01_1.VOB file **37** and a VTS_01_2.VOB file **38** for convenience sake. This split storage is done to make the size of each file smaller than a predetermined size. In this example, a video object of approximately 6 GB is split into, and stored as, two files such that the size of each of these two files is smaller than 4 GB.

If the files should be recorded compliant with the ISO9660 standard, too, the size of each file is preferably smaller than 1 GB. It should be noted that although the video object has been split into multiple files, those files are recorded adjacent to each other on the disk. That is why the two portions of the video object are never stored at two independent locations separately. A VTS_01_0.BUP file **39** stores a backup **VTSI#L1backup** of the first video title set information.

A VTS_02_0.IFO file **40** stores information **VTSI#2** about a second video title set. A VTS_02__0.VOB file **41** stores a video object for menu **VTS#2 Menu** for the second video title set. The video object **VTS#2** of the second video title set is stored in a VTS_02_1.VOB file **42.** In this example, this video object has a size of approximately 2 GB.

A VTS_02_0.BUP file **43** stores a backup **VTSI#2** backup of the second video title set information.

Portions **(a), (b)** and **(c)** of FIG. 6 show correlation between image data generated for a DVD-Video disk and image data that has been modified for a dual layer DVD-R or DVD-RW disk according to the present invention. Specifically, portions **(a)** and **(b)** of FIG. **6** show an example of image data generated for a DVD-Video disk. More specifically, portion **(a)** of FIG. **6** shows the arrangement of data in a video content and address pointers specified by the video manager, while portion **(b)** of FIG. 6 shows the arrangement of files in the video content and address pointers from FileEntry that is stored as file management information in the file structure. And portion **(a)** of FIG. **6** shows an example of image data that has been modified for a dual layer DVD-R disk.

The image data for the L0 layer and the image data for the L1 layer are prepared to be written on the logical address space of a dual layer DVD-Video disk. A UDF (universal disk format) volume structure **50** and a UDF file structure **51** are arranged in this order at the beginning of this logical address space and a video content is stored at a partition (i.e., the space between the volume structures) defined by the UDF volume structures.

Portion **(a)** of FIG. **6** corresponds to the example that has already been described with reference to FIG. **5.** As shown in portion **(a)** of FIG. **6,** arranged in this order are: video manager information (VMGI) **52** with a video manager menu (VMG Menu) **53** and a video manager information backup (VMGI backup) **54;** a first video title set including video title set information (VTSI#1) **55,** its menu (VTS#1 Menu) **56,** a video object (VTS#1) **57,** and a video title set information backup (VTSI#L backup) **58;** a second video title set including video title set information (VTSI#2) **59,** its menu (VTS#2 Menu) **60,** a video object (VTS#2) **61,** and a video title set information backup (VTSI#2 backup) **62;** and the UDF volume structure.

In FIG. **6,** the dashed line **64** extending through portions **(a)** and **(b)** indicates the layer boundary that is set tentatively when the original image data is generated. According to this line **64,** the first half of VTS#1 should be included in the image data for the L0 layer, while the second half thereof in the image data for the L1 layer. And these two halves are written on the respective layers.

FIG. **7** shows the details of the first video title set. The video object (VTS#1) **57** consists of CELLS #1 through #4 **66** to **69,** which are minimum continuous playback units of video. According to the DVD-video standard, no cell may cover multiple layers, and therefore, the cells have been divided on the layer boundary **64.**

When a player to play a read-only DVD-Video (which will be simply referred to herein as a "DVD player") is performing a playback operation, the DVD player jumps to respective video title sets by reference to the pointers to the video title sets that are included in the video manager information **52.** In the video title set information **55** or **59** of each video data in the video title set, stored is the pointer information. By reference to this pointer information, the DVD player performs the playback operation. The DVD player gets the start address of the video manager information **52** using the file structure but does not have to access the file structure again after that. This is because the information that would require access is stored in the video content.

Portion **(b)** of FIG. **6** shows data files included in respective video contents. The arrangement of the data is the same as that shown in portion **(a)** of FIG. **6.** However, the location information of the respective files is included in the file entries in the file structure **51.** That is why respective files can be accessed by reference to these pieces of information.

Portion **(c)** of FIG. **6** shows the image data that has been modified by the system controller **350** of the video server **30** to be written on the dual layer DVD-R. The end of the data recordable area of the L0 layer of the dual layer DVD-R or DVD-PW disk is indicated by the dashed line **65.**

The additional data **25** is inserted between the file structure **51** of the original image data for the L0 layer and the VIDEO_TS.IFO file **32.** As a result, the VIDEO_TS.IFO file 32 and the other files that follow it are shifted backward. Consequently, the size of the modified image data **IMAGE2.DAT** for the L0 layer has increased from the original size by the additional data **25**. Meanwhile, in the image data for the L1 layer, the arrangement of the data of the video content remains the same.

In the logical sector space consisting of the image data **IMAGE2.DAT** for the L0 and L1 layers, however, the locations of the data of the video content in the image data for the L1 layer are also shifted by the additional data. In addition, the partition size also increases by the additional data and the location of the volume structure **63** is also shifted by the additional data.

The start address of the VIDEO_TS.IFO file **32** may be detected not just by tracing the file structure but also by reference to the VOBTBL.DAT information of the CMF data.

It should be noted that even after the additional data has been inserted, the relative locations of the respective data in the video content remain the same. That is why there is no need to change the address information that is stored in the video manager and the video title sets shown in portion **(a)** of FIG. **6.**

By adding the data size of the additional data to the location information (i.e., addresses) of the respective files defined by the file entries that are stored in the file structure **51,** the location information of the respective files shifted is updated. In addition, the partition size registered with the volume structure **50** and the address information registered with the volume structure **63** are also updated.

Portions **(a)** and **(b)** of FIG. **8** show exemplary data of the volume/file structure to be stored on a sector-by-sector basis. The contents of FIG. **8** correspond to those of FIGS. **5** and **6.** In the logical sector space consisting of image data, LSNs are assigned to respective sectors. The volume/file structure is compliant with the UDF.

As shown in portion **(a)** of FIG. **8,** Beginning Extended Area Descriptor, NSR Descriptor, and Terminating Extended Area Descriptor are stored in LSN #16 through #18, respectively. These pieces of information are called a "Volume Recognition Sequence", which indicates that this disk is compliant with the ECMA 167 standard that is a parent standard of the UDF standard.

Primary Volume Descriptor, Partition Descriptor, Logical Volume Descriptor, and Terminating Descriptor are stored in LSNs #32 through #35, respectively. These pieces of information are called a "Volume Descriptor Sequence". Particularly, the location information of the partition is described by the Partition Descriptor and information about the beginning of the file structure is described by the Logical Volume Descriptor.

Anchor Volume Descriptor Pointer is stored in LSN #256. This pointer includes the location information of the Volume Descriptor Sequence. And this pointer is stored in LSN #256 and at the end **N** of the logical sector space. Also, each descriptor includes the logical sector number at which the descriptor is stored. That is why if a descriptor has shifted, its logical sector number needs to be changed. In this example, LSNs #0 through #256 define the volume structure, while LSNs #272 through #288 define the file structure.

In LSN #272, stored is the file entry of the Root directory, which represents the location information of the Root directory. According to the UDF, a file set descriptor is actually stored as the first piece of information of a file structure but is omitted from FIG. **8**. In LSN #273, stored are the Root directory and the location information of the file entry of the VIDEO_TS directory, which is a sub-directory of the Root directory. In LSN #274, stored are the file entry of the VIDEO_TS directory and the location information of the VIDEO_TS directory. In LSN #275, stored are the VIDEO_TS directory and the location information of the file entries of respective files registered with this directory.

And in LSNs #276 through #288, stored are the file entries of the respective files that are registered with the VIDEO_TS directory. In this case, the file location information included in each file entry is stored in the forms of Extent length and Extent Position, which is information about the start address of the extent.

As already described with reference to FIG. **7,** when image data is stored on the dual layer DVD-R or DVD-RW disk, the locations of the files registered with the VIOEO_TS directory are shifted by the additional data **25.** That is why in the location information of the respective files pointed to by the respective file entries that are stored in the LSNs #276 through #288, the value stored as the Extent Position is increased by the size of the additional data **25** and updated. In addition, since the size of the partition is also increased, the location information of the partition as described by the Partition Descriptor in the LSN #33 is updated, too. Furthermore, since each descriptor is supposed to store the number of the logical sector, where the descriptor itself is stored, in Tag ID, the logical sector number N in the Anchor Volume Descriptor Pointer to be stored last is also updated.

Another way to update the file location information for shifted files is to update the location of the partition. The information to specify the location of the partition, which is stored in the Partition Descriptor is updated so that the location of the partition is shifted due to the insertion of the additional data. In this case, each piece of file location information is not updated. This is why each file is addressed by using logical block number which is relative address from the top of the partition, although the logical block number is not described in Fig. 8.

FIG. **9** shows the procedure of the processing to be done by the recorder **20** and the video server **30** of this preferred embodiment.

In FIG. **9,** the processing steps on the left-hand side are performed by the recorder **20,** while those on the right-hand side are performed by the video server **30.** Also, the processing shown in FIG. **9** is not started until the user has gotten connected to the video server **30** using the recorder **20** and until connection is established between the recorder **20** and the video server **30.**

First, in Step **S1,** by operating the recorder **20,** the user selects a title to purchase among the title list of available contents. The title list information may be transmitted from the video server **30** to the recorder **20** when the recorder **20** is connected to the video server **30** or may have been acquired in advance by the recorder **20** over the Internet **10,** for example.

In any case, the information about the title that has been selected by the user as the content to purchase is sent out as a download request to the video server **30** over the Internet **10.**

Next, in Step **S2,** when the user inserts a dual layer DVD-R disk to record the content thereon, the drive of the recorder **20** (i.e., the drive controller **204)** detects the disk loaded and performs startup processing to make the disk ready to write data on.

Subsequently, in Step **S3,** the drive controller **204** reads information from the lead-in area of the dual layer DVD-R disk loaded, gets the end address **X** of the data recordable area of the L0 layer and the disk key, and sends these pieces of information to the video server **30.**

Meanwhile, in Step **S4,** the video server **30** receives the information about the title selected by the user and searches for its associated image data in accordance with the information.

Then, in Step **S5,** the video server **30** shifts, by reference to the end address **X** received, the locations of the data of the video content in the image data for the L0 layer among the data that has been searched for in the processing step **S4,** thereby processing the image data for the L0 layer.

Thereafter, in Step **S6,** the video server **30** performs predetermined types of processing of generating and issuing a decryption key using the disk key received to decode the data that has been encrypted in advance by the CPRM technique. According to the CPRM technique, the decryption key is made out of the disk key, and therefore, the image data stored in the video server **30** does not have to be encrypted for every disk. The encrypted data may be used for a plurality of disks. And the decryption key generated is stored at a predetermined location in the image data.

Next, in Step **S7,** the video server **30** modifies the file entries of the respective files of the video content and updates the location information for the shifted video content. The video server **30** also updates the partition size and the anchor volume descriptor pointer stored in the logical sector number **N** as pieces of information about the volume structure. As a result of this processing step, image data for the L0 layer that has been optimized to be written on the dual layer DVD-R disk can be obtained.

Next, in Step **S8,** the video server **30** transmits the image data that has been modified in the previous processing steps **S5** and **S6** to the recorder **20.**

Subsequently, in Step **S9**, the recorder **20** receives the image data. Finally, in Step **S10**, the recorder **20** writes the received image data on the dual layer disk. Once the written data has been verified, this disk is provided for the user.

In the foregoing description, the original image data is supposed to be CMP data. However, the present invention is in no way limited to that specific preferred embodiment. Although multiple image data are supposed to be prepared for respective recording layers in the preferred embodiment described above, single continuous data may also be prepared. This is because the layer boundary can be specified by any other piece of information. For example, the layer information may be stored in CONTROL. DAT or the cell boundary may be found by searching the DVD-Video format data.

Next, as shown in portion **(b1)** of FIG. **1,** additional data **25** is inserted into the CMF data **24** that has been encrypted by the CPRM technique. This processing step is performed by the video server **30.** As the additional data **25,** media key block data may be written. The media key block is data in which the disk key has been encrypted with all device keys issued by licensers and which could be called "cryptographic key chain" so to speak.

Video object data may be prepared by encoding the original material data in an MPEG-2 compression format, for example. If the data is provided as a package or by a download service, however, the data should have high image quality. That is why it would take a lot of time to get the encoding process done and the data could not be encoded in real time. For that reason, the cell boundary needs to be pre-defined by the layer boundary. Also, even if the image data stored in the video server **30** were compliant with a non-CMF format, it would be effective to modify the image data according to a parameter of the dual layer DVD-R disk used.

It should be noted that the data recordable area of the L0 layer of a dual layer DVD-R or DVD-RW disk has a bigger size than that of a dual layer DVD-video disk. That is why if data that would not require the entire combined capacity of 8.54 GB of a dual layer DVD-R or DVD-RW disk but would need a space that is somewhat smaller than the maximum capacity by several tens of MB, for example, is used when a video content is produced to make a dual layer DVD-Video disk, no re-encoding would be needed in providing a download service.

Optionally, another video content compliant with the DVD-Video format may be recorded as the additional data. The additional data normally has a size of several tens of MB, and therefore, a short video content could be recorded as well. In that case, file management information for those additional files should also be added to the file structure.

If necessary, file management information compliant with the ISO 9660 standard could be added to the file structure.

Since the area between the end of a video content and the volume structure to be recorded at the end of the logical sector space is usually vacant, data for use in a personal computer (PC), for example, may be added to that area such that the data recordable area of the L1 layer can be made full use of.

As for download terminals, only disks, of which the end address **X** of the data recordable area of the L0 layer is a predetermined one, may be used. As an object of the present invention is to make download services available at low costs for various purposes, the same effect is also achieved even in that case. This is because download services are particularly required to get ready to provide titles in numbers that are too large for a normal shop to provide. For that reason, in the CMF format data that were used to produce DVD-Video disks that have gone on public sale, the image data to be stored in the L0 layer is usually different from one title to another. According to this preferred embodiment, there is no need to re-encode these CMF format data but just dummy data needs to be inserted and encryption should be done by a predetermined encryption technique, thus contributing to cutting down on the cost of authoring.

### EMBODIMENT 2

In the first preferred embodiment of the present invention described above, the data size of CMF data for L0 layer is adjusted. And that CMF data is supposed to have been encrypted by the CPRM technique.

A second preferred embodiment of the present invention to be described below is a method of writing data in a situation where the CMF data has been encrypted by a different encryption method, not the CPRM technique.

Examples of known encryption methods suitable for recordable disks include not just the CPRM technique but also AACS (advanced access content system) and CSS (copy scrambling system). Hereinafter, it will be described what type of processing needs to be carried out in addition to the processing steps of the first preferred embodiment when data is encrypted by the CSS technique. If the CSS technique is adopted, encryption is done using a piece of information that is unique for each disk as a target of recording.

As the piece of information unique to each disk, medium identification information stored in the lead-in area of the disk (i.e., the disk key) may be used.

No disk keys are available from any DVD-R on the market. For that reason, when a DVD-R is used, a new type of disk for which a unique disk key has been defined will be needed. Or a new type of disk on which a valid key has been recorded in advance may be needed. This preferred embodiment will be described on the supposition that the disk is provided with the disk key to use already recorded in the lead-in area as an example of the CSS encryption.

Hereinafter, the second preferred embodiment of the present invention will be described with reference to portions **(a)** through **(e)** of FIG. **10.** The processing of this preferred embodiment may be carried out using the recorder **20** and the video server **30** of the first preferred embodiment described above. Thus, in the following description, the processing of this preferred embodiment is also supposed to be carried out using the same recorder **20** and the same video server **30.**

Portions **(a), (b1), (c), (d)** and **(e)** of FIG. **10** outline the processing of writing image data on a dual layer optical disk **29.**

First, portion **(c)** of FIG. **10** shows the storage location of a disk key **91** on the disk **29.** In this example, the disk key **91** is stored in the lead-in area that is an inner area on the disk **29.**

Portion **(a)** of FIG. **10** shows the image data **21** that has been prepared so as to be written on the L0 layer. Meanwhile, the image data to be written on the L1 layer is the same as that shown in portion **(b2)** of FIG. **1,** and the description thereof will be omitted herein.

As shown in portion (a) of FIG. **10,** the DVD-video data for L0 layer **23** includes a number of video objects (VOBs), each of which includes a plurality of video object units (VOBUs) **80.** The VOBU **80** is a data unit including video data, the size of which is represented by a video playback duration of 0.4 through 1.0 second.

The VOBU **80** is a set of multiple packs, which form the low-order layer of an MPEG program stream. There are multiple different types of packs, including video packs identified by v and audio packs identified by A. These packs have a constant data size (which is also called a "pack length") of 2 KB (= 2,048 bytes).

For example, the video pack (V) **81** includes a pack header **82** and video data **83.** The video data **83 m**ay or may not have been encrypted.

The recorder **20** sends the disk key **91** shown in portion **(c)** of FIG. **10** to the video server **30.**

Portion **(d)** of FIG. **10** shows CMF data **84,** of which some of the video packs have been encrypted with the disk key **91.** With the disk key **91,** the video server **30** encrypts the video data **83.** The decryption key may be stored in the content (e.g., in the VIDEO_TS.IFO file) and read by the recorder **20** when the content is played back.

To guarantee a high degree of security, every video data is preferably encrypted. In that case, however, it would take a lot of time to get the decoding process done. That is why the video data stored in only 50 to 60% of the video packs need to be encrypted actually.

In the CMF data **84,** the DVD-Video data for the L0 layer **85** includes both non-encrypted video packs **86** and encrypted video packs **87** alike.

The encrypted video pack **87** includes a pack header **88** and video data **89** that has been encrypted with the disk key **91.** It should be noted that scramble information **90** is included in the pack header **88** of the video pack **87.** The scramble information indicates whether or not the video data of that pack has been encrypted. For example, if the scramble information is one, it may mean that the video data has been encrypted. On the other hand, if the scramble information is zero, it may mean that the video data has not been encrypted.

It should be noted that even if the video data had been originally encrypted by the CPRM technique, that video data could also be decoded once and then encrypted again by the CSS technique using the disk key **91.** This is because such processing of changing the encryption methods can be done in real time even on video data with a relatively big data size that it would take approximately two hours to play back. Consequently, such a change of encryption methods would pose no obstacle to getting the processing done when the video data of the user's selected title is transmitted.

Next, as shown in portion **(b1)** of FIG. **10,** additional data **25** is inserted into the CMF data **84** and then CSS encryption is carried out. This processing step is performed by the video server **30.**

Meanwhile, the CMF data **84,** the data size of which has been adjusted by inserting the additional data **25** thereto, is written on the data recordable area **12** of the disk **29** with no unnecessary space or no unwritten data left. This processing step is performed by the recorder **20.** These processing steps are performed just as already described for the first preferred embodiment.

Portion **(e)** of FIG. **10** shows in detail a sector portion on which encrypted video packs have been written. The disk **29** has a sector structure in which there are a number of recording units **92,** each consisting of a sector header **93** and a sector **94.** The sector size of each sector is 2 KB, which is equal to the data size of a video pack.

In the sector **94** shown in portion **(e)** of FIG. **10,** stored is the video pack **87** as it is. That is to say, the scramble information **90** and the encrypted video data **89** included in the video pack **87** are stored in the sector **94.**

The recording processing of this preferred embodiment is partly characterized by writing scramble information **95** on the sector header **93,** too, after the data size of the image data to be written on the L0 layer has been adjusted with the insertion of the additional data **25.** The scramble information **95** is a copy of the scramble information **90** and their contents are identical with each other.

The scramble information **95** is stored in the sector header **93** in order to control the drive's reading. A drive that is going to read data cannot determine whether the data has been encrypted or not. Meanwhile, even if the data has been encrypted, it is not preferable that content data is read unconditionally. That is why a conventional drive compliant with the DVD standard is designed so as not to read the sector that follows the sector header **93** if the scramble information stored in the sector header **93** is one but to read the sector only when the scramble information is zero.

According to this preferred embodiment, after the size of the image data to write has been adjusted with the insertion of the additional data, that scramble information has the same value as the other scramble information indicating whether or not the data has been encrypted, thereby controlling reading operation of the drive. If the sector header information were generated in the state shown in portion **(a)** or **(d)** of FIG. **10,** then the physical sector number recorded in the sector header, although not shown, should be updated because the data storage location would change after the additional data has been inserted. That is why it is more efficient to set the scramble information after the additional data has been inserted.

Just by reading the scramble information in the sector header, the drive can determine whether or not the data in the sector that follows the header may be read. In that case, the drive would not read data that has been encrypted in response to a request from unauthorized software, thus contributing to controlling playback of a content using such unauthorized software.

FIG. **11** shows the procedure of processing to be done by the recorder **20** and the video server **30** according to this preferred embodiment. Unlike the processing of the first preferred embodiment shown in FIG. **9,** the processing shown in FIG. **11** includes processing steps **S11** and **S12** in place of the processing steps **S6** and **S10** shown in FIG. **9,** respectively. Only these differences will be briefly described below.

In Step **S2,** when loaded with a dual layer DVD-R disk, the recorder **20** reads a disk key for use to perform CSS encryption of the dual layer DVD-R disk.

Next, in Step **S3,** the disk key read, as well as the end address **X** of the data recordable area of the L0 layer, is sent to the video server **30.**

Thereafter, in Step **S5** the video server **30** shifts the locations of the encrypted video content data in the image data for the L0 layer by reference to the end address x received, thereby processing the image data for the L0 layer.

Subsequently, in Step **S11,** using the disk key received, the video server **30** encrypts the video content data of the user's requested title by the CSS technique and sets scramble information in the pack header. According to the CSS encryption technique, the encrypted data needs to be decrypted with a disk key that has been recorded in advance on a disk. That is why the video server **30** needs to perform the CSS encryption using the disk key.

Meanwhile, in Step **S12,** while writing the received image data on the dual layer DVD-R disk, the recorder **20** copies the scramble information in the pack header and writes it on the sector header.

A dual layer DVD-R disk that has been produced by performing these processing steps can control the drive's encrypted data reading.

Although the present invention has been described as being applied to a dual layer disk, the present invention is also applicable for use in a multilayer disk with three or more recording layers. This is because the first and second layers that have been described for the first and second preferred embodiments of the present invention are also included in such a multilayer disk.

In receiving a service of downloading and recording a video content on a disk with multiple recording layers such as a dual layer recordable disk, the present invention provides a data processing apparatus and a recorder that can be used effectively to change the sizes of the image data efficiently and just as intended.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A data processing apparatus for generating data to be written continuously on first and second recording layers of a recording medium, the first and second recording layers having first and second storage capacities, respectively, the data processing apparatus comprising:
a data storage in which the data to be written is split into, and stored separately as, first and second data, the first data having a data size that is smaller than the first storage capacity, the second data having a data size that is smaller than the second storage capacity;
a communication section for getting the end address of a data recordable area of the first recording layer;
a controller for adjusting the data size of the first data such that the beginning of the first data is written at the start address of the data recordable area of the first recording layer and that the end of the first data is written at the end address gotten; and
an output section for outputting the first data, the data size of which has been adjusted, and the second data.

2. The data processing apparatus of claim 1, wherein the controller adjusts the data size of the first data by inserting additional data by reference to the end address.

3. The data processing apparatus of claim 2, wherein the start address of the data recordable area of the first recording layer has been determined in advance, and
wherein the controller inserts additional data, the data size of which is equal to a difference between the area size of the data recordable area of the first recording layer having the first storage capacity and the data size of the first data stored, the first storage capacity having been calculated based on the start and end addresses.

4. The data processing apparatus of claim 2, wherein the first data includes content data and management information for managing the location of the content data, and
wherein if the location of the content data has changed due to the insertion of the additional data, the controller updates the management information.

5. The data processing apparatus of claim 4, wherein the recording medium stores unique identification information, and
wherein the communication section gets the identification information, and
wherein the controller encrypts the content data using the identification information and generates scramble information, indicating that the content data has been encrypted, as a portion of the first data.

6. A recorder for writing data that has been received from a server on first and second recording layers of a recording medium continuously, the recorder comprising:
a communication controller for sending the end address of a data recordable area of the first recording layer to the server and receiving first data, the data size of which has been adjusted by reference to the end address, and second data; and
a drive controller for writing the first data, the data size of which has been adjusted, on the first recording layer and also writing the second data on the second recording layer.

7. The recorder of claim 6, wherein the recording medium stores unique identification information, and
wherein the communication controller transmits the identification information to the server, and then receives the first data, which has been encrypted with the identification information and the data size of which has been adjusted.

8. The recorder of claim 6, wherein a recording unit is defined for the recording medium, and
wherein the first data includes encrypted content data, scramble information indicating that the content data has been encrypted, and management information for managing the location of the content data, and
wherein the drive controller divides the encrypted content data into multiple recording units, writes the units separately, and also writes the scramble information on a header of each said recording unit.

9. The recorder of claim 6, wherein the drive controller starts writing the first data at the start address of the data recordable area of the first recording layer such that the end of the first data is written at the end address.

10. A player for reading data from a recording medium, on which the data has been written by the recorder of claim 9, comprising:
a controller that instructs when to start reading; and
a drive controller for starting reading the first data at the start address of the data recordable area of the first recording layer and also starting reading the second data at the start address of the data recordable area of the second recording layer,
wherein as the end of the first data has been written at the end address, the drive controller starts reading the second data at the start address of the data recordable area of the second recording layer that is right next to the end address.

11. A recording medium on which data has been written continuously on first and second recording layers having first and second storage capacities, respectively, and each having a data recordable area,
wherein first data starts to be written at the start address of the data recordable area of the first recording layer and the end of the first data is written at the end address thereof, and
wherein second data starts to be written at the start address of the data recordable area of the second recording layer,
wherein the first data includes data for adjusting the data length of the first data.
